# EUROPÄISCHE PATENTANMELDUNG

(11) **EP 1 495 803 A1**
(43) Veröffentlichungstag der Anmeldung: **12.01.2005**
(21) Anmeldenummer: 04014799.3
(22) Anmeldetag: 24.06.2004
(51) Int. Cl.: B01J 25/00, B01J 25/02, C22C 3/00

(54) **Verfahren zum Laugen von Aluminium-Metall-Legierung**

(30) Priorität: 07.07.2003 DE 10330636
(71) Anmelder: Bayer Technology Services GmbH, 51368 Leverkusen (DE)
(72) Erfinder: Boll, Matthias, Dr., 51061 Köln (DE); Völkening, Stephan, Dr., 50670 Köln (DE)

(57) **Zusammenfassung**

Es wird ein Verfahren zum Behandeln von Aluminium-Metall-Legierungen mit organischen oder anorganischen Basen beschrieben durch Einwirken lassen einer wässrigen Lösung der Base, Entfernen der wässrigen Base und Waschen des behandelten Legierungsmaterials, wobei während der Einwirkzeit der Base der Laugungsprozess anhand des Potenzials verfolgt wird, das sich durch die behandelte Aluminium-Metall-Legierung und den bei der Reaktion gegebenenfalls entstehenden Wasserstoff an einer Messelektrode einstellt.

## Beschreibung

Die Erfindung betrifft ein Verfahren zum Behandeln von Aluminium-Metall-Legierungen mit organischen oder anorganischen Basen durch Einwirken lassen einer wässrigen Lösung der Base, Entfernen der wässrigen Base und Waschen des behandelten Legierungsmaterials.

Die Laugung von Raney-Legierungen (aluminiumhaltigen Legierungen mit größeren Anteilen zum Beispiel an Nickel oder Kupfer mit eventuellen weiteren Zuschlägen an Metallen, z. B. Nebengruppenelementen wie Eisen) wird großtechnisch durch Eintragen der Legierung in Kalilauge oder Natronlauge verschiedener Konzentrationen durchgeführt. Unter Rühren und eventuellem Refluxieren wird Aluminium unter Wasserstoffbildung aus der Legierung gelöst. In der hier beschriebenen Erfindung wird ein Verfahren gezeigt, durch das sich dieser Laugungsprozess durch eine elektrochemische Messung online verfolgen lässt. Dadurch kann die Laugung bei einem gewünschten, über dieses Verfahren ermittelten Laugungsgrad gestoppt beziehungsweise der vorgesehene Endpunkt des Laugungsvorganges sicher bestimmt werden.

Diese Erfindung bezieht sich insbesondere auf ein apparativ einfaches, elektrochemisches Überwachen des Laugungsvorgangs von Raney-Legierungen. Solche Legierungen, hier sind vor allem die Nickel- und Kupfer-Legierungen zu nennen, werden durch die Laugungsbehandlung und das damit zumindest teilweise stattfindende Herauslösen des Aluminiums zu aktiven Katalysatoren, die weltweit im großem Maßstab zum Beispiel bei der Hydrierung mit gasförmigem oder gelöstem Wasserstoff vieler verschiedener chemischer Verbindungen Anwendung finden. Einfache Verfahren zur zuverlässigen Messung des Laugungsprozesses werden in der Literatur nicht beschrieben.

Bei der Laugung spielt der Grad der Laugung eine große Rolle, wie in der Literatur schon seit längerem bekannt ist. So zeigt die Aktivität von gelaugten Aluminium-Nickel- und Aluminium-Cobalt-Legierungen als heterogene Katalysatoren bei der Hydrierung von Cyclohexanon, Naphtalin und Benzol eine deutliche Abhängigkeit des Laugungsgrades (S. Nishimra et. AI., Appl. Cat. 76 (1991), 19-29).

Die Laugungsreaktion verläuft grundsätzlich so schnell, dass eine klassische Elementaranalyse an Proben, die aus dem Reaktionsgefäß gezogen werden, nicht geeignet ist. Aufgrund einer häufig in der Praxis schwankenden Qualität der zum Laugen verwendeten Legierung (u. a. spielen hierbei die eingesetzten Komgrößen eine wichtige Rolle in Bezug auf die Laugungsgeschwindigkeit und die Zusammensetzung des Materials nach Beendigung der Laugung, V. R. Choudhary et. AI., J. Chem. Tech. Biotechnol., 33A (1983), 339-349) erscheint aber eine einfache, auch gegen die aggressiven Reaktionsbedingungen stabile in-situ-Analytik sinnvoll.

Die punktuell eingesetzte, indirekte Messung über die Wasserstoffentwicklung ist nur bedingt hilfreich, denn die gelaugte Legierung nimmt unbekannte Mengen Wasserstoff auf, so dass nur eine grobe Abschätzung des ausgelaugten Aluminiumanteils vorgenommen werden kann (s. auch D. J. Young et. AI., J. of Cat. 64, (1980), 116-123). Zudem können große Fehler auftreten, wenn in der Legierung größere Mengen an nicht umgesetztem Aluminium vorliegen.

Der (teilweise unvollständige) Laugungsprozess und die bei der Laugung ablaufende Kinetik wurde bereits an mehreren Stellen untersucht (z. B. von D. J. Young et. al., J. of Cat. 64; (1980), 116-123 und V. R. Choudhary et. al., J. Chem. Tech. Biotechnol., 33A (1983), 339-349). In beiden Fällen wurde die Wasserstoffentwicklung als Monitor für den Laugungsfortschritt benutzt. Chemische Analysen der Lauge nach dem Laugungsprozess wurden ebenfalls im Stand der Technik beschrieben. Mit elektrochemischen Methoden (RDE = "Rotating Disk Electrode") wurden z.B. kurze Stücke von Raney-Kupfer-Stangen mit dem Ziel untersucht, den kinetischen und strukturellen Ablauf des Laugungsprozesses zu bestimmen (A. J. Smith et. al., J. of, Appl. Electrochem. 29 (1999), 1085) beziehungsweise die Zugabe von Chromat und den Einfluss der Laugung auf dieses System zu untersuchen (A. J. Smith et. al., J. of Appl. Electrochem. 30 (2000), 1097).

Ein verlässliches Überwachen des Laugungsvorganges in-situ, insbesondere ohne Probenahme, was Aufgabe der Erfindung ist, wurde bislang noch nicht beschrieben.

Die Aufgabe wird erfindungsgemäß gelöst durch die Messung des Potenzials einer Elektrode, die bevorzugt aus einem Goldblech ("Ableitelektrode") besteht und die in den Reaktor, in dem die Auslaugung einer Aluminium-Metall-Legierung insbesondere einer Raney-Legierung durch Lauge stattfindet, eintaucht und in dem, insbesondere durch intensives Rühren der Suspension, zusätzlich ein häufiger Kontakt zwischen dem sich bildenden fein verteilten Metall und der Ableitelektrode gewährleistet wird. Die Potenzialdifferenz der Ableitelektrode und einer Referenzelektrode, die bevorzugt über eine Salzbrücke ebenfalls leitfähig mit dem Reaktor verbunden ist, wird zeitabhängig erfasst und ändert sich mit zunehmendem Laugungsgrad.

Gegenstand der Erfindung ist ein Verfahren zum Behandeln von Aluminium-Metall-Legierungen mit organischen oder anorganischen Basen, insbesondere Alkalicarbonat oder Alkalihydroxid, besonders bevorzugt Natriumhydroxid oder Kaliumhydroxid, durch Einwirken lassen (Laugung) einer wässrigen Lösung der Base bei einer Temperatur von insbesondere bis zu 100°C, bevorzugt 20 bis 100°C, gegebenenfalls unter Inertgasatmosphäre, Entfernen der wässrigen Base und Waschen des behandelten Legierungsmaterials, dadurch gekennzeichnet, dass während der Einwirkzeit der Base der Laugungsprozess anhand der Potenzialdifferenz zwischen einer Messelektrode (Ableitelektrode), die in das Prozessgemisch eintaucht, und einer Referenzelektrode verfolgt und bei Erreichen einer vorgegebenen Potenzialdifferenz (entsprechend einer gewünschten Zusammensetzung der behandelten Legierung) abgebrochen wird.

Dieses Verfahren ermöglicht so den gezielten Abbruch einer Laugung zur Einstellung einer gewünschten Eigenschaft des Produktes.

Das generelle Verfahren, elektrochemische Potenziale an zum Beispiel Gold- oder Platin-Ableitelektroden oder an Ableitelektroden aus anderen Materialien zu messen, ist allgemein bekannt und wird vielfach angewendet (vergleiche zum Beispiel J. Pardillos-Guindet, J. of Catalysis 155, (1995), 12-20 oder U. Kürschner et. al., Catalysis Letters 34, (1995), 191-199).

Bei der Laugung wird das Aluminium aus der Legierung insbesondere unter Wasserstoffbildung gelöst. In der Lösung befindet sich daher bevorzugt gelöster und gasförmiger Wasserstoff neben Metallpartikeln aus der Ausgangslegierung.

Die Referenzelektrode ist in einer bevorzugten Ausführung elektrisch leitend mit der Reaktorlösung verbunden und befindet sich besonders bevorzugt außerhalb des Reaktors. Die Referenzelektrode soll damit von der Laugungstemperatur unabhängig sein und ein zeitlich konstantes Potenzial liefern.

Bevorzugt wird als Referenzelektrode eine Elektrode zweiter Art eingesetzt. Unter Elektrode zweiter Art wird in diesem Kontext eine Elektrode mit zeitlich konstantem und reproduzierbarem elektrochemischen Potential, z.B. die Ag/AgCl oder "Argental"-Elektrode oder die Hg/Hg₂Cl₂ oder ""Kalomel"-Elektrode verstanden.

Das Metall der Aluminium-Metall-Legierung wird bevorzugt ausgewählt aus der Reihe: Nickel, Kupfer, Kobalt, wobei das Metall allein oder in Mischung vorliegt.

Das Verhältnis der Gewichtsanteile von Aluminium zum Metall in der Ausgangslegierung beträgt bevorzugt 50/50 bis 20/80.

Der Gewichtsanteil von Aluminium an der Ausgangslegierung beträgt insbesondere bevorzugt 5 bis 95 Gew.-%, bevorzugt 15 bis 80 Gew.-%.

Die Ausgangslegierung kann in einer bevorzugten Ausführungsform der Erfindung als Nebenbestandteil ein Metall aus der Reihe: Eisen, Cer, Vanadium, Niob, Tantal, Chrom, Molybdän oder Mangan allein oder in Mischung enthalten.

Die Einwirkzeit der Base liegt bevorzugt im Bereich von mehreren Sekunden bis mehreren Tage, besonders bevorzugt im Bereich von 10 Minuten bis 2 Stunden.

Das Potenzial der von Aluminium abgereicherten Legierungspartikel ändert sich im Verlauf der Laugung. Durch insbesondere Rühren der Suspension treffen die Legierungspartikel z.B. gegen die Ableitelektrode. Dabei verändert sich ihr Potenzial dahingehend, dass es zu einer Angleichung an das Potenzial der Legierungspartikel kommt. Damit verändert sich auch das Potenzial der Ableitelektrode im Verlauf der Laugung. Nach Kalibrierung kann die Laugung quantitativ in-situ online verfolgt werden.

In einem bevorzugten Verfahren wird daher die Reaktionsmischung während der Laugung gerührt.

Vorteilhaft ist auch ein besonders bevorzugtes Verfahren, dadurch gekennzeichnet, dass die Ableitelektrode quer zur Hauptströmungsrichtung der Lösung im Reaktor angebracht ist.

Besonders bevorzugt wird die Messelektrode mit während der Laugung gebildeten Metallpartikeln belegt.

Als Ableitelektrode eignet sich besonders ein inertes Metall wie Gold, da an diesem Metall sehr oft keine weiteren chemischen Prozesse ablaufen, die das Potenzial beeinflussen könnten. Die Messelektrode besteht daher bevorzugt aus einem chemisch inerten Metall, insbesondere aus Gold, bevorzugt ausgebildet als Blech, Draht oder Gitter.

Besonders bevorzugt ist eine Ausführung des Verfahrens, bei der die von der Lösung bedeckte Oberfläche der Ableitelektrode um mindestens das 10fache, bevorzugt um mindestens das 100fache größer ist als die mittlere Oberfläche der Legierungspartikel.

Weiterer Gegenstand der Erfindung ist die Verwendung des Verfahrensproduktes nach dem erfindungsgemäßen Verfahren als Katalysator, bevorzugt als Hydrierkatalysator.

Die Erfindung wird nachfolgend anhand der Figuren durch das Beispiel, welches jedoch keine Beschränkung der Erfindung darstellt, näher erläutert.

Es zeigen:
- Fig. 1: xdie schematische Darstellung einer Messanordnung zur Durchführung des Verfahrens mit Rührer 1, Voltmeter 2, Referenzelektrode 3, Ableitelektrode 4, teilweise gelaugte Raney-Legierung 5, Wasserstoff 6 und der wässrigen Lösung 7 von K2S04
- Fig. 2: die Abhängigkeit des Potenzials der Ableitelektrode gegen die Referenzelektrode zusammen mit dem Al/Ni-Verhältnis (in Gew.-%) auf der Oberfläche des gebildeten Materials vom Laugungsfortschritt.
a) Beginn der Laugung, b) Verlauf der Potenzialdifferenz der Ableitelektrode gegen die Referenzelektrode, c) Verhältnis Al/Ni in Gew.-%

### Beispiel:

### Elektrochemisches Monitoring der Laugung von Raney-Nickel

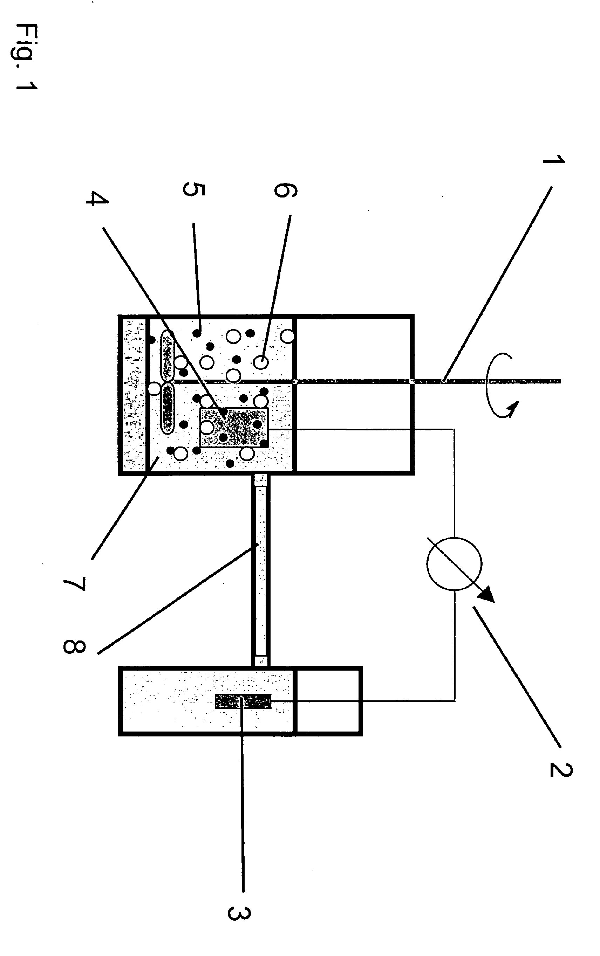

Figur 1 zeigt die schematische Darstellung der Messanordnung zur Durchführung des nachfolgenden Beispiels. Das Reaktionsgefäß weist einen Propellerrührer 1 auf und ist über eine Salzbrücke 8 mit einer Referenzelektrode 3 gekoppelt. Etwa 1 g einer Aluminium-Nickel-Legierung 5 mit einer analytischen Volumenzusammensetzung von 72,5 Gew.-% Al, 24,3 Gew.-% Ni, Gew.-% 3,2 Fe (Hersteller: H. C. Starck, Goslar, Deutschland) werden bei Raumtemperatur in 50 ml 0,5 molarer K2S04-Lösung (als Leitsalz) vorgelegt. In die Lösung wird unter Rühren 10 ml einer 1 molaren NaOH-Lösung zugegeben und der Potenzialverlauf bestimmt. In die Lösung 7 taucht dazu ein reines Goldblech 4 (Hersteller: Alfa Aesar, Karlsruhe, Deutschland) mit einer Fläche von etwa 1 cm2 als Ableitelektrode 4 ein, an das ein 0,5 mm dicker Golddraht (Lieferant: ABCR, Karlsruhe, Deutschland) elektrisch leitend befestigt wurde. Das Goldblech ist über den Draht mit dem Potentiometer 2 verbunden, das die Spannung zwischen Goldblech 4 (Ableitelektrode AE) und einer Referenzelektrode 3 (Kalomelelektrode in 1 molarer wässriger KCl, Typ 133410, Ch.0235 der Fa. Schott, Mainz, Deutschland, RE) misst. Die Referenzelektrode 3 ist über eine mit 1 molarer wässriger KCl-Lösung gefüllte Salzbrücke 8 mit dem Laugungsreaktor verbunden. Nach etwa 2, 11, 21, 31 und 53 Minuten werden wenige mg der Suspension mit einer Pipette entnommen und in einer Nutsche schnell pH-neutral gewaschen. Anschließend wird mittels Röntgenphotoelektronen-spektroskopie (ESCA) der Nickel- und Aluminiumgehalt der entnommenen Proben bestimmt.

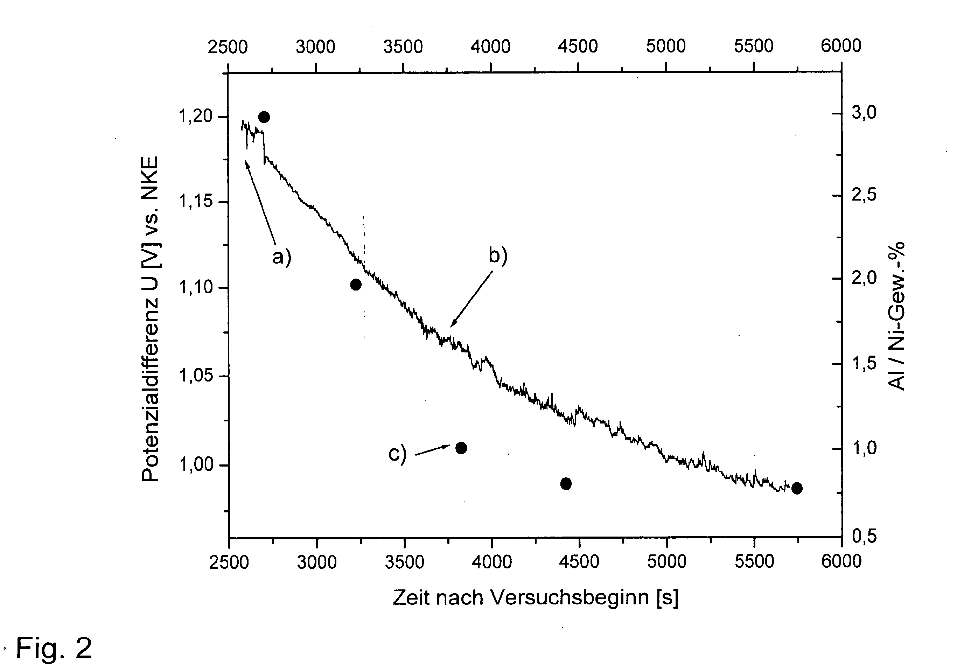

In Figur 2 ist das Potenzial der AE gegen die RE zusammen mit dem Al/Ni-Verhältnis (in Gew.-%) als Funktion des Laugungsfortschritts dargestellt. Die gemessene Potenzialdifferenz gibt qualitativ den Verlauf der Laugung wieder, so dass durch Bestimmung einer Kalibrierkurve das aktuelle Al/Ni-Verhältnis der aktiven Katalysatorpartikel durch einfache Messung der Potenzialdifferenz ermittelt wird.

Die gemessene Potenzialdifferenz (Fig. 2, schwarze Linie b)) zwischen der Ableitelektrode und der Referenzelektrode nimmt vom Beginn der Laugung a) mit der zunehmenden Laugungszeit ab. Gleichzeitig verändert sich die Zusammensetzung des Katalysators, indem sich das Al/Ni-Verhältnis (in Gew.-%) verändert, wie durch die schwarzen Punkte gezeigt wird (c). Dieses wurde durch Messung der Zusammensetzung von Proben, die zu den jeweiligen Zeitpunkten aus der Lösung entnommen und gewaschen wurden, ermittelt. ,

## Patentansprüche

1. Verfahren zum Behandeln von Aluminium-Metall-Legierungen mit organischen oder anorganischen Basen, insbesondere Alkalicarbonat oder Alkalihydroxid, besonders bevorzugt Natriumhydroxid oder Kaliumhydroxid, durch Einwirken lassen (Laugung) einer wässrigen Lösung der Base, gegebenenfalls unter Inertgasatmosphäre, Entfernen der wässrigen Base und Waschen des behandelten Legierungsmaterials, **dadurch gekennzeichnet, dass** während der Einwirkzeit der Base der Laugungsprozess anhand der Potenzialdifferenz zwischen einer Messelektrode (Ableitelektrode), die in das Prozessgemisch eintaucht, und einer Referenzelektrode verfolgt und bei Erreichen einer vorgegebenen Potenzialdifferenz abgebrochen wird.

2. Verfahren nach Anspruch 1, **dadurch gekennzeichnet, dass** die Referenzelektrode elektrisch leitend mit der Reaktorlösung verbunden ist und sich bevorzugt außerhalb des Reaktors befindet. und ein zeitlich konstantes Potenzial liefert.

3. Verfahren nach Anspruch 2, **dadurch gekennzeichnet, dass** die Referenzelektrode eine Elektrode zweiter Art ist.

4. Verfahren nach Anspruch 1 bis 3, **dadurch gekennzeichnet, dass** die Messelektrode aus einem chemisch inerten Metall, insbesondere aus Gold, besteht.

5. Verfahren nach Anspruch 1 bis 4, **dadurch gekennzeichnet, dass** die Ableitelektrode in Form eines Bleches, Gitters oder Drahtes vorliegt.

6. Verfahren nach Anspruch 5, **dadurch gekennzeichnet, dass** die von der Lösung bedeckte Oberfläche der Ableitelektrode um mindestens das 10fache, bevorzugt um mindestens das 100fache größer ist als die mittlere Oberfläche der Legierungspartikel.

7. Verfahren nach Anspruch 1 bis 6, **dadurch gekennzeichnet, dass** die Reaktionsmischung während der Laugung gerührt wird.

8. Verfahren nach Anspruch 7, **dadurch gekennzeichnet, dass** die Ableitelektrode quer zur Hauptströmungsrichtung der Lösung im Reaktor angebracht ist.

9. Verfahren nach einem der Ansprüche 1 bis 8, **dadurch gekennzeichnet, dass** das Metall der Aluminium-Metall-Legierung ausgewählt ist aus der Reihe: Nickel, Kupfer, Kobalt, wobei das Metall allein oder in Mischung vorliegt.

10. Verfahren nach einem der Ansprüche 1 bis 9, **dadurch gekennzeichnet, dass** das Verhältnis der Gewichtsanteile von Aluminium zum Metall in der Ausgangslegierung 50/50 bis 20/80 beträgt.

11. Verfahren nach einem der Ansprüche 1 bis 10, **dadurch gekennzeichnet, dass** der Gewichtsanteil von Aluminium an der Ausgangslegierung 5 bis 95 Gew.-%, bevorzugt 15 bis 80 Gew.-% beträgt.

12. Verfahren nach einem der Ansprüche 1 bis 11, **dadurch gekennzeichnet, dass** die Ausgangslegierung als Nebenbestandteil ein Metall aus der Reihe: Eisen, Cer, Vanadium, Niob, Tantal, Chrom, Molybdän oder Mangan allein oder in Mischung enthält.

13. Verfahren nach einem der Ansprüche 1 bis 12, **dadurch gekennzeichnet, dass** die Einwirkzeit der Base im Bereich von mehreren Sekunden bis mehreren Tage, bevorzugt im Bereich von 10 Minuten bis 2 Stunden liegt.

14. Verfahren nach einem der Ansprüche 1 bis 13, **dadurch gekennzeichnet, dass** die Messelektrode mit während der Laugung gebildeten Metallpartikeln belegt wird.

15. Verwendung des Verfahrensproduktes aus einem Verfahren nach einem der Ansprüche 1 bis 14 als Katalysator, bevorzugt als Hydrierkatalysator.
